# EUROPEAN PATENT APPLICATION

(11) **EP 4 332 826 A1**
(43) Date of publication of application: **06.03.2024**
(21) Application number: 22871660.1
(22) Date of filing: 10.08.2022

(54) **IMAGE RECOGNITION METHOD AND ELECTRONIC DEVICE**

(30) Priority: 27.09.2021 CN 202111137201
(71) Applicant: Hangzhou Hikvision System Technology Co., Ltd., Hangzhou, Zhejiang 310051 (CN)
(72) Inventor: LIN, Quanyu, Hangzhou, Zhejiang 310051 (CN)
(74) Representative: Epping - Hermann - Fischer
(86) International application number: PCT/CN2022/111396
(87) International publication number: WO 2023/045602

(57) **Abstract**

Examples of the present disclosure provide an image recognition method and an electronic device, which relates to the field of artificial intelligence and can improve the recognition of image picture information. The method comprises: determining a target image area in a target image picture; wherein the target image area is a candidate area in which a target event occurs in the target image picture; associating the target image area with a target algorithm; wherein the associating indicates that image recognition is performed on the target image area using the target algorithm to determine whether the target event exists in the target image area.

## Description

The present application claims the priority of a Chinese patent application No. 202111137201.2 filed with the State Intellectual Property Office of People's Republic of China on September 27, 2021 and entitled "Image recognition method and electronic device", which is incorporated herein by reference in its entirety.

### TECHNICAL FIELD

The present disclosure relates to the technical field of artificial intelligence, in particular to an image recognition method and an electronic device.

### BACKGROUND

With the rapid development of artificial intelligence technology, the technical means of capturing an image picture of a target area by a camera and determining whether a target event exists in the target area has been applied in all aspects of daily life.

Currently, a method for monitoring an event in the target area is to determine whether a target event exists in the target area based on an image picture of the target area captured by a camera. Taking the camera for capturing a vehicle pressing a solid line at a traffic light intersection as an example, the camera captures an image picture of the traffic light intersection in real time. Then, it is determined whether a vehicle exists in the traffic light intersection based on the captured image picture, and in case that a vehicle exists in the image picture, based on position information of the vehicle, it is determined whether an event of the vehicle pressing solid line exists, and further determined whether the vehicle has violated regulations.

However, the above-mentioned image picture may include multiple events, but in the above-mentioned technical means, a camera can only recognize one event in an image picture, which results in low recognition of the above-mentioned image picture.

### SUMMARY

The purpose of the examples of the present disclosure is to provide an image recognition method and an electronic device, which can improve the recognition of image picture information. For the above purpose, the specific technical solutions are as follows:
In a first aspect, an example of the present disclosure provides an image recognition method, which is applied to an electronic device; wherein the method includes: determining a target image area in a target image picture; wherein the target image area is a candidate area in which a target event occurs in the target image picture; associating the target image area with a target algorithm; wherein the associating indicates that image recognition is performed on the target image area using the target algorithm to determine whether the target event exists in the target image area.

It can be seen that in the solution provided by the example of the present disclosure, the electronic device determines the candidate area in which a target event occurs in the target image picture as the target image area, and determines an associated algorithm (i.e., the target algorithm) for the target image area, wherein the target algorithm is configured to determine whether the target event exists in the target image area. In this way, the above-mentioned electronic device can select one or more target image areas in the target image picture as required, and associate the one or more target image areas with one or more algorithms, so that the electronic device can perform the image recognition on a certain target image area using the target algorithm associated therewith, thereby improving the recognition of the electronic device to the target image picture.

In the solution provided by the example of the present disclosure, an electronic device can associate respectively the one or more target image areas in the target image picture with one or more algorithms, and for each target image area, the electronic device can recognize one or more target events from the target image area based on the associated one or more target algorithms. That is to say, an electronic device can complete the recognition of one or more target events, compared with the recognition of only one target event completed by an electronic device, the solution provided by the example of the present disclosure can improve the recognition of the electronic device to the target image picture, thereby reducing the number of electronic devices required for the recognition of the target event.

In a possible example, the target algorithm is used to perform an image recognition on the target image area to determine whether the target event exists in the target image area; or, a target message is sent to a target server, so that the target server can determines whether the target event exists in the target image area based on the target message, wherein the target message includes position information of the target image area and an identifier of the target algorithm.

In a possible example, the above-mentioned determining the target image area in the target image picture includes: inputting the above-mentioned target image picture into an image area recognition model to obtain an output result which comprises: the target image area and the target event; wherein the image area recognition model is configured to recognize a candidate area in which a preset event occurs in the target image picture, and the preset event comprises the target event.

In a possible example, the above-mentioned image area recognition model is trained based on multiple sample image pictures and labels of the multiple sample image pictures; wherein a label of a sample image picture is configured to represent: the preset event that occurs in the sample image picture, and the image area in which the preset event occurs.

In a possible example, the above-mentioned determining the target image area in the target image picture further includes: receiving a first operation for the target image picture; wherein the first operation is configured to indicate the target image area in the target image picture; responding to the first operation to determine the target image area in the target image picture; receiving a second operation for the target image area; wherein the second operation is configured to indicate the target event associated with the target image area; responding to the second operation to determine the target event associated with the target image area.

In a possible example, the above-mentioned associating the target image area with the target algorithm includes: establishing a correspondence between an identifier of the target image area and an identifier of the target algorithm.

In a possible example, before associating the target image area with the target algorithm, the method further includes: acquiring an identifier of the target event based on the target area; and determining the target algorithm corresponding to the target event based on correspondences between identifiers of events and identifiers of algorithms.

In a second aspect, an example of the present disclosure provides an electronic device, which includes: a determining module and an associating module; wherein the determining module is configured for determining a target image area in a target image picture; wherein the target image area is a candidate area in which a target event occurs in the target image picture; the associating module is configured for associating the target image area with a target algorithm; wherein the associating indicates that image recognition is performed on the target image area using the target algorithm to determine whether the target event exists in the target image area.

In a possible example, the above-mentioned electronic device further includes: a recognition module or a sending module; wherein the recognition module is configured for performing an image recognition on the target image area using the target algorithm to determine whether the target event exists in the target image area; the sending module is configured for sending a target message to a target server, so that the target server determines whether the target event exists in the target image area based on the target message, wherein the target message includes position information of the target image area and an identifier of the target algorithm.

The above-mentioned electronic device further includes: an inputting module, wherein the input module is configured for inputting the target image picture into an image area recognition model to obtain an output result, which comprises: the target image area and the target event; wherein the image area recognition model is configured to recognize a candidate area in which a preset event occurs in the target image picture, and the preset event comprises the target event.

The above-mentioned image area recognition model is trained based on multiple sample image pictures and labels of the multiple sample image pictures; wherein a label of a sample image picture is configured to represent: the preset event that occurs in the sample image picture, and the image area in which the preset event occurs.

The above-mentioned associating module is further specifically configured for establishing a correspondence between an identifier of the target image area and an identifier of the target algorithm.

The above-mentioned electronic device further includes an acquiring module configured for acquiring the identifier of the target event based on the target area; the above-mentioned determining module is further configured for determining the target algorithm corresponding to the target event based on correspondences between identifiers of events and identifiers of algorithms.

In a third aspect, an example of the present disclosure provides an electronic device including a memory and a processor, the memory being coupled to the processor; wherein the memory is configured to store computer program codes including computer instructions that; when executed by the processor, cause the electronic device carry out the method according to any one of the first aspect and its possible examples.

In a fourth aspect, an example of the present disclosure provides a computer storage medium, including computer instructions, which, when run on a computing device, causes the computing device to carry out the method according to any one of the above-mentioned first aspect and its possible examples.

In a fifth aspect, an example of the present disclosure provides a computer program product, which, when run on a computer, causes the computer to carry out the method according to any one of the above-mentioned first aspect and its possible examples.

It should be understood that the beneficial effects achieved by the technical solutions of the second to fifth aspects of the examples of the present disclosure and the corresponding possible examples can be referred to the above technical effects of the first aspect and the corresponding possible examples, which will not be further repeated here.

### BRIEF DESCRIPTION OF THE DRAWINGS

In order to more clearly describe the technical solutions of the examples of the disclosure and the prior art, accompanying drawings that need to be used in the examples and the prior art will be briefly described below. Obviously, accompanying drawings described below are for only some of examples of the disclosure. Those skilled in the art may also obtain other accompanying drawings based on these accompanying drawings without any creative efforts.
Figure 1 is a schematic diagram 1 of an image recognition system provided by an example of the present disclosure;
Figure 2 is a schematic diagram 2 of an image recognition system provided by an example of the present disclosure;
Figure 3 is a schematic diagram of a hardware of an electronic device provided by an example of the present disclosure;
Figure 4 is a schematic diagram 1 of an image recognition method provided by an example of the present disclosure;
Figure 5 is a schematic diagram 2 of an image recognition method provided by an example of the present disclosure;
Figure 6 is a schematic diagram of an image picture provided by an example of the present disclosure;
Figure 7 is a schematic diagram 3 of an image recognition method provided by an example of the present disclosure;
Figure 8 is a schematic diagram 4 of an image recognition method provided by an example of the present disclosure;
Figure 9 is a schematic diagram 5 of an image recognition method provided by an example of the present disclosure;
Figure 10 is a schematic diagram 6 of an image recognition method provided by an example of the present disclosure;
Figure 11 is a schematic diagram 1 of an image picture division provided by an example of the present disclosure;
Figure 12 is a schematic diagram 7 of an image recognition method provided by an example of the present disclosure;
Figure 13 is a schematic diagram 2 of an image picture division provided by an example of the present disclosure;
Figure 14 is a schematic diagram 8 of an image recognition method provided by an example of the present disclosure;
Figure 15 is a schematic diagram 1 of the structure of an electronic device provided by an example of the present disclosure;
Figure 16 is a schematic diagram 2 of the structure of an electronic device provided by an example of the present disclosure.

### DETAILED DESCRIPTION

The term "and/or" herein is just an association relationship that describes related objects, indicating that three relationships can exist. For example, A and/or B can indicate three situations, in which A exists alone, both of A and B exist, and B exists alone.

The terms "first" and "second" in the description and claims of the examples of the present disclosure are used to distinguish different objects, rather than to describe a specific order of objects. For example, a first image area, a second image area, etc. are used to distinguish different image areas, rather than to describe a specific order of the image areas.

In the examples of the present disclosure, words such as "exemplary" or "for example" are used to represent examples, illustrations or explanations. Any example or design described as "exemplary" or "for example" in the examples of the present disclosure is not to be construed as preferred or advantageous over other examples or designs. Specifically, use of the words "exemplary" or "for example" is intended to present the concept in a concrete manner.

In the description of the examples of the present disclosure, unless otherwise specified, the meaning of "multiple" refers to two or more. For example, multiple processing units refer to two or more processing units; multiple systems refer to two or more systems.

The technical solutions in the examples of the present disclosure will be clearly and completely described below with reference to the accompanying drawings in the examples of the present disclosure. Obviously, the described examples are only some, and not all, of the examples of the disclosure. All other examples obtained based on the examples of the disclosure by those skilled in the art without any creative efforts fall into the scope of protection of the disclosure.

With the advent of the Internet of Everything era, video monitoring technology is increasingly used in real life. Currently, a camera can only handle one kind of event; for example, a camera that captures whether a vehicle presses a solid line at a traffic light intersection can only monitor an event of whether a vehicle in the target area presses a solid line. When it is necessary to monitor multiple events in the target area, multiple cameras must be stacked at the position of the above-mentioned camera, and multiple different algorithms can be configured on the multiple cameras to achieve monitoring of multiple events in the target area. For example, a camera A monitors whether an event of vehicle pressing solid line exists in the target area based on an algorithm A, and a camera B monitors whether an event of pedestrians running red lights exists in the target area based on an algorithm B. That is to say, when multiple events in the target area need to be monitored, a multi-channel video picture of the target area need to be acquired, and a recognition is performed on the multi-channel video picture based on various algorithms, so as to achieve monitoring of multiple events in the target area. It can be seen that in the existing technology, a single camera has very low recognition of the image picture of the target area.

In addition, the solution of installing multiple cameras at the same position has caused a "sparrow pole" phenomenon, that is, a large number of cameras are installed on the same camera pole installed on the road. This solution is limited by physical space and also has a lot of waste in resource costs (such as, bandwidth costs, management costs, maintenance costs, etc.).

Based on this, an example of the present disclosure provides an image recognition method and an electronic device, wherein the electronic device determines a target image area in a target image picture; wherein the target image area is a candidate area in which a target event occurs in the target image picture; associates the target image area with a target algorithm; wherein the associating indicates that image recognition is performed on the target image area using the target algorithm to determine whether the target event exists in the target image area. Through the technical solutions provided by the example of the present disclosure, the image picture recognition of the target area by a single electronic device can be improved. In addition, the above-mentioned electronic device may be a camera or a server, and the specific example of the present disclosure is not limited thereto.

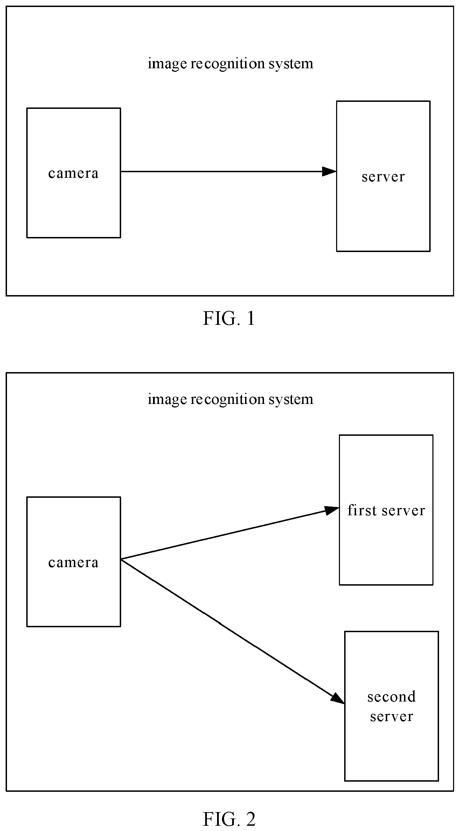

The image recognition method provided by the example of the present disclosure can be applied to an image recognition system as shown in Figure 1. The image recognition system includes: a camera and a server. Wherein, the camera can be a smart camera, that is, a camera with image collection, image analysis and sending function; or it can be an ordinary camera, that is, a camera with image collection and sending function.

In an optional example, the camera determines the target image area in the captured target image picture, and associates the target image area with the target algorithm, then determines whether the target event exists in the target image area based on the target algorithm. Optionally, the camera can send the result of whether the target event exists in the target image area to the server. In this example, the camera may be a smart camera.

In another optional example, the camera determines the target image area in the captured target image picture, and associates the target image area with the target algorithm, then sends a first message and a second message with an association relationship to the server, wherein the first message is to indicate the target image area, and the second message is to indicate the target algorithm. The server determines the target image area based on the first message, determines the target algorithm based on the second message, and performs image recognition on the target image area using the target algorithm based on the association relationship between the first and the second message, to determine whether the target event exists in the target image area. In this example, the camera may be a smart camera.

The examples of the present disclosure do not limit what information the first message specifically includes. For example, the first message may be contents of the target image area, that is, directly indicate the contents of the target image area. For another example, if the camera further sends the target image picture to the server, the first message may be position information of the target image area in the target image picture, that is, the position information of the target image area in the target image picture and the target image area are used to indicate indirectly the contents of the target image area.

The examples of the present disclosure do not limit what information the second message specifically includes. For example, the second message may be the target algorithm itself. For another example, if the target algorithm is stored in the server itself, the second message may be an identifier of the target algorithm.

In another optional example, the camera sends the captured target image picture to a server, the server determines the target image area in the target image picture, associates the target image area with the target algorithm, then determines whether the target event exists in the target image area based on the target algorithm. In this example, the camera may be an ordinary camera or a smart camera.

In any of the above technical solutions, the target image area may be one or more image areas. If the target image area includes multiple image areas, associating the target image area with the target algorithm may include: associating each of the target image areas with the corresponding target algorithm.

When the target image area includes multiple image areas, the server in any of the above optional examples may be one server or multiple servers, for example, one image area corresponds to one server.

For example, as shown in Figure 2, it is a schematic diagram of another image recognition method provided by an example of the present disclosure. The image recognition system includes a camera, a first server and a second server; wherein the camera determines a first image area and a second image area in a captured target image picture, and associates the first image area with a first algorithm, associates the second image area with a second algorithm. Then, the camera determines whether a first event exists in the first image area based on the first algorithm, and determines whether a second event exists in the second image area based on the second algorithm; and sends the result of whether the first event exists in the first image area determined based on the first algorithm to the first server; sends the result of whether the second event exists in the second image area determined based on the second algorithm to the second server.

In case that an execution subject of the solution provided by the example of the present disclosure is one server, one server can associate one or more target algorithms for one or more target image areas in the target image picture, and for each of the target image areas, the server can recognize one or more target events from the target image area based on the associated one or more target algorithms, that is, one server can complete the recognition of one or more target events.

In case that the execution subject of the present disclosure is multiple servers, each of the servers can associate one or more target algorithms for an acquired target image area, and recognize one or more target events from the target image area based on the associated one or more target algorithms, that is, each of the servers can complete the recognition of one or more target events.

Other examples will not be listed one by one.

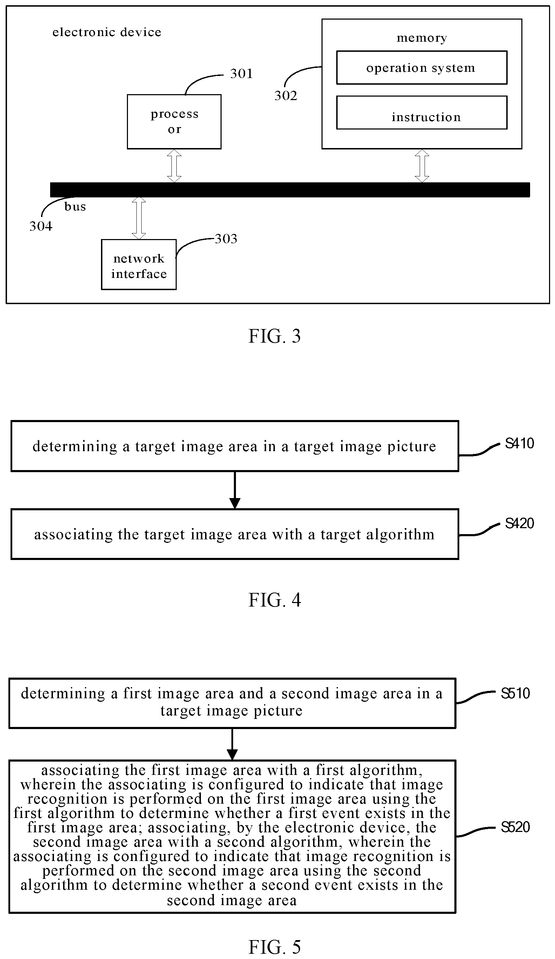

For example, Figure 3 is a schematic diagram of a hardware of an electronic device provided by an example of the present disclosure. Specifically, the electronic device may be a camera itself, or may be other computing devices. As shown in Figure 3, the electronic device includes a processor 301, a memory 302 and a network interface 303.

Wherein, the processor 301 includes one or more CPUs. The CPU can be a single-CPU or a multi-CPU.

The memory 302 includes, but is not limited to, a RAM, a ROM, a EPROM, a flash memory, an optical memory, etc.

Optionally, the processor 301 carries out an image recognition method provided by an example of the present disclosure through reading instructions stored in the memory 302, alternatively, the processor 301 carries out the image recognition method provided by an example of the present disclosure through internally stored instructions. In case that the processor 301 carries out an image recognition method provided by an example of the present disclosure through reading instructions stored in the memory 302, the memory 302 stores instructions which carry out the image recognition method provided by the example of the present disclosure. The network interface 303 is a wired interface (port), such as FDDI, and GE interface. Alternatively, the network interface 303 is a wireless interface. It should be understood that the network interface 303 includes multiple physical ports, and the network interface 303 is configured to receive image picture information and the like.

Optionally, the electronic device also includes a bus 304. The above-mentioned processor 301, memory 302, and network interface 303 are usually connected to each other through the bus 304 or in other ways.

An example of the present disclosure provides an image recognition method, which is executed by an electronic device which can be integrated on a camera, a server or other computing devices with computing capabilities. As shown in Figure 4, the method can include S410-S420.

S410. determining, by the electronic device, a target image area in a target image picture.

The above-mentioned target image area is a candidate area in which a target event occurs in the target image picture, wherein the target image picture can be any of the image picture collected by the camera.

The above target event includes a target behavior event and/or a target object event. For example, the target behavior event can be a vehicle rear-end event, an event of vehicle pressing solid line, an event of pedestrian running red light, and an event of vendors littering, etc., and the target object event can be an object event, such as earth-moving trucks existing in the target image area, elementary school students in pedestrians, pregnant women in the target image area, and blacklisted persons recognized, etc.

The candidate area is an area in which a probability of the target event occurring in the above-mentioned target image picture is the highest or the probability is relatively large (for example, the probability is greater than a certain threshold). It should be noted that during an actual example, the electronic device does not need to calculate the probability of the target event occurring in the target image picture, so as to determine which area in the target picture is the target image area. For a specific method of determining the target image area in the target image picture, please refer to the detailed description of subsequent examples.

Specifically, the above-mentioned candidate area may be a preset area associated with the target event and in which the probability of the target event occurring is the highest or relatively large, for example, if the target event is an event of running red light, the candidate area may be an intersection area, and if the target event is an event of vendors littering, the candidate area can be an area in front of the shop, etc.

The method of determining a candidate area in the example of the present disclosure does not need to calculate the probability of the target event occurring in a target image. The target event may or may not occur in the recognized candidate area, this example does not limit this.

Specifically, the user can manually circle a candidate area in a target image picture, or the electronic device can recognize the candidate area in the target image picture by itself.

In an example, the electronic device can recognize a feature object contained in a candidate area from a target image picture, thereby determining the candidate area contained in the target image picture. For example, when the above candidate area is an intersection area, the crosswalk line can be taken as a feature object, and the electronic device determines the candidate area by recognizing the crosswalk lines in the target image area.

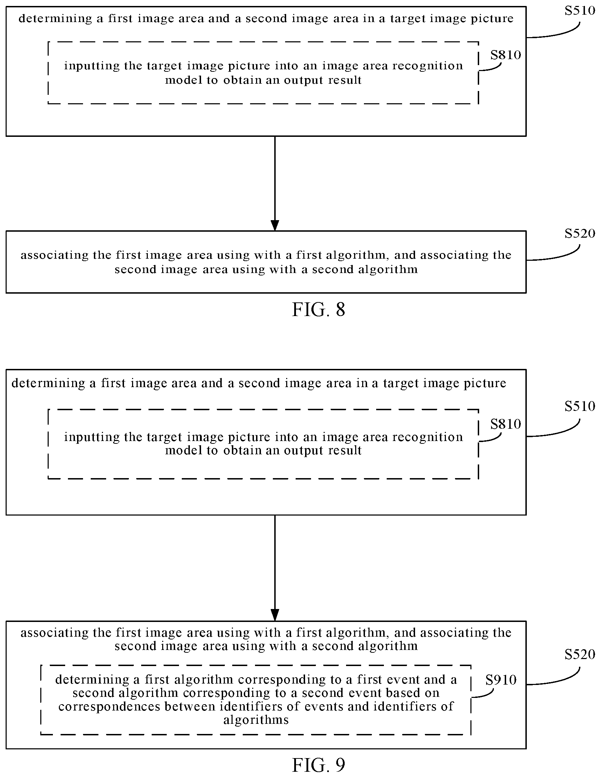

In another example, the electronic device may further recognize a candidate area from a target image picture based on the example shown in Figure 8 below, which will not be described in detail now here.

It should be noted that the above-mentioned target image area may include one or more image areas.

S420. associating, by the electronic device, the target image area with a target algorithm.

The above-mentioned associating the target image area with the target algorithm is to indicate that image recognition is performed on the target image area using the target algorithm to determine whether a target event exists in the target image area.

It should be noted that the above target algorithm may include one or more algorithms. Optionally, a target image area can be associated with a target algorithm. For example, the above target image area is an image area configured to recognize littering, and the above target algorithm only includes an algorithm for recognizing littering. Optionally, a target image area can be associated with multiple target algorithms. For example, if the above-mentioned target image area is an image area configured to recognize illegally parked vehicles, then the above-mentioned target algorithm includes an algorithm for recognizing vehicles and an algorithm for detecting illegally parked vehicles. For another example, a target image area needs to be configured for recognizing littering, and for detecting illegally parked vehicles, and then the target image area can be associated with the target algorithm for detecting littering and the target algorithm for recognizing vehicles, and the target algorithm for detecting illegally parked vehicles. It should be noted that when multiple target image areas completely overlap, the multiple target image areas can be determined through multiple block selections, or one block selection is performed and multiple algorithms are associated with the block-selected target image area.

A target algorithm usually includes a recognition algorithm for a target behavior event and a recognition algorithm for a target object event. For example, the algorithm for a target behavior event includes an algorithm for recognizing vehicle running red lights, an algorithm for recognizing speeding vehicle, and an algorithm for recognizing pedestrians littering, and the algorithm for the target object event includes algorithms such as a facial recognition algorithm, a vehicle recognition algorithm etc.

The electronic device determines a candidate area in the target image picture in which the target event occurs as a target image area, and determines an associated algorithm (i.e., a target algorithm) for the target image area, wherein the target algorithm is configured to determine whether the target event exists in the target image area. In this way, the above-mentioned electronic device can select one or more target image areas in the target image picture as required, and associate the one or more target image areas with one or more algorithms, so that the electronic device can perform the image recognition on the target image area using the algorithm associated with a certain target image area, thereby improving the recognition of the electronic device to the target image picture.

In the solution provided by the an example of the present disclosure, an electronic device can associate respectively the one or more target image areas in the target image picture with one or more algorithms, and for each target image area, the electronic device can recognize one or more target events from the target image area based on the associated one or more target algorithms. That is to say, an electronic device can complete the recognition of one or more target events. Compared with the recognition of one target event completed by an electronic device, the solution provided by the example of the present disclosure can improve the recognition of the electronic device to the target image picture, thereby reducing the number of electronic devices required for the recognition of the target event.

This example of the present disclosure takes a target image area including a first image area and a second image area as an example to illustrate. As shown in Figure 5, the image recognition method provided by the example of the present disclosure includes: S510-S520.

S510. determining, by the electronic device, a first image area and a second image area in a target image picture.

The first image area is a candidate area in which the first event occurs in the above-mentioned target image picture, and the second image area is a candidate area in which the second event occurs in the above-mentioned target image picture.

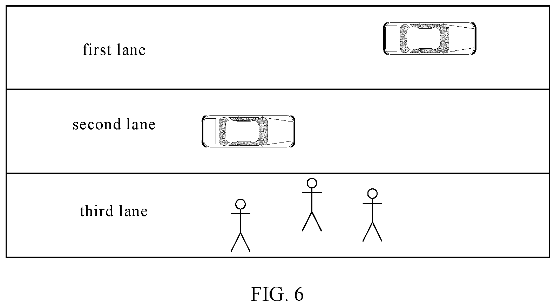

For example, in the target image picture shown in Figure 6, a first and second lanes are configured for driving vehicles, and a third lane is configured for pedestrians; therefore, a probability of an event of a vehicle pressing a solid line occurring in the first and second lanes is the greatest, and a probability of an event of pedestrians littering occurring in the third lane is the greatest; therefore, the electronic device can determine an area of the first lane and/or the second lane in the target image picture as a first image area, determine an area of the third lane as a second image area. In addition, the electronic device can further determine the first lane as the first image area, the second lane as the second image area, and the third lane as a third image area.

It should be understood that the above-mentioned position relationship between the first image area and the second image area includes any one of intersecting relationship, non-intersecting relationship or inclusion relationship; that is to say, the same area in the target image picture may correspond to multiple image areas, that is, there may be multiple different events in the same area of the target image. For example, the first lane can be determined as a first image area and a second image area at the same time, wherein the first image area is a candidate area corresponding to the event of vehicle pressing solid line, and the second image area is an area corresponding to the event of vehicle rear-end collision, that is, the first lane is not only the area corresponding to the event of vehicle pressing solid line, but also the area corresponding to the event of vehicle rear-end collision.

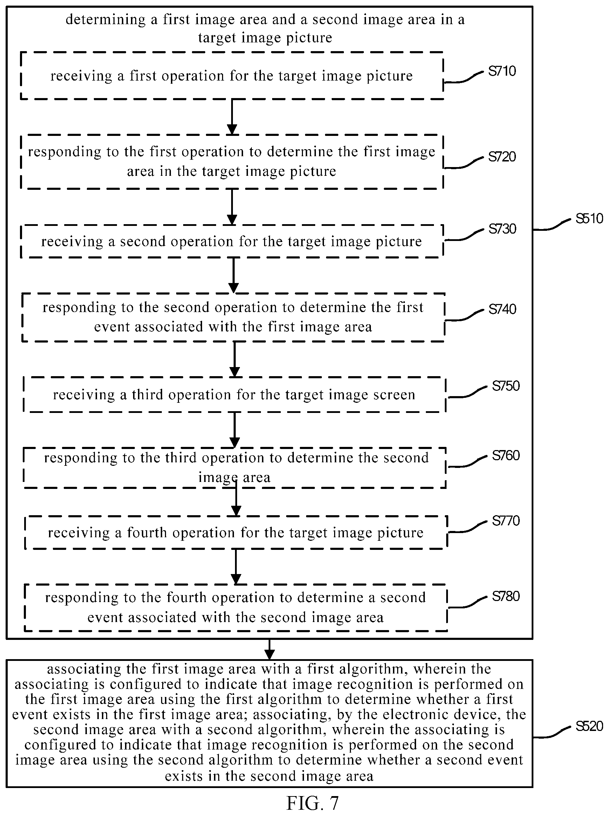

Optionally, the above-mentioned method of determining the first image area and the second image area in the target image picture can be manually confirmed, as shown in Figure 7, in conjunction with Figure 5, the method of determining the first image area and the second image area in the target image picture specifically includes:
S710. receiving, by the electronic device, a first operation for the target image picture.

The above-mentioned first operation is configured to indicate the first image area in the target image picture, specifically, the user can manually circle the first image area in the target image picture; or the user configures on the electronic device the position information of the first image area in the target image, and the electronic device reads the position information of the first image area configured by the user. Specifically, the example of the present disclosure does not limit the specific content of the above-mentioned first operation.

S720. responding, by the electronic device, to the first operation to determine the first image area in the target image picture.

The above-mentioned determining the first image area specifically includes: determining the position information of the first image area in the above-mentioned target image picture.

Specifically, the first operation is configured to indicate the first image area in the target image picture, and the electronic device can determine the image area indicated by the first operation as the first image area.

Optionally, when the first operation is for the user to manually circle the first image area in the target image picture, the electronic device responds to the manual circling operation and further reads the position information of the first image area in the target image picture.

Optionally, when the first operation is for the user to configure on the electronic device the position information of the first image area in the target image picture, the electronic device reads the configuration information and further acquires the position information of the first image area in the target image picture.

S730. receiving, by the electronic device, a second operation for the target image picture.

The above-mentioned second operation is configured to indicate a first event associated with the first image area; specifically, the first event associated with the first image area specified by the user.

Optionally, the user specifies the first event associated with the first image area, and the electronic device receives identifier information of the first event, which can be any one of an event index, an event name, or an event type.

S740. responding, by the electronic device, to the second operation to determine the first event associated with the first image area.

Optionally, the above-mentioned determining the first event associated with the first image area specifically can be that the electronic device acquires the identifier information of the first event based on the above-mentioned second operation, and then acquires the first event based on the identifier information of the first event.

The above-mentioned first event is configured for the electronic device to subsequently determine a first algorithm associated with the first image area based on the first event.

S750. receiving, by the electronic device, a third operation for the target image picture.

The above-mentioned third operation is configured to indicate a second image area in the target image picture.

S760. responding, by the electronic device, to the third operation to determine the second image area.

S770. receiving, by the electronic device, a fourth operation for the target image picture.

S780. responding, by the electronic device, to the fourth operation to determine a second event associated with the second image area.

It should be noted that the above-mentioned descriptions of S750-S780 and S710-S740 are similar. For details, refer to the detailed description of S710-S740, which will not be repeated here.

It should be noted that the example of the present disclosure does not limit the execution order of S710-S740 and S750-S780, that is to say, the electronic device can execute S750-S780 after executing S710-S740, or can execute S710-S740 after executing S750-S780.

Optionally, the above method of determining the first image area and the second image area in the target image picture can further be determined with a training model, as shown in Figure 8, in conjunction with Figure 5, the method of determining the first image area and the second image area in the target image picture is specifically S810.

S810. inputting, by the electronic device, the target image picture into an image area recognition model to obtain an output result.

The above output result includes: a first image area, a first event associated with the first image area, a second image area, and a second event associated with the second image area.

It should be noted that the above image area recognition model is configured to recognize a candidate area in which the preset event occurs in the target image. Specifically, the image area recognition model can recognize a candidate area from the target image picture and take the recognized candidate area as the target image area, and determine the preset event occurring in the recognized candidate area as the target event. The above-mentioned preset event is a preset event that is expected to be recognized in the solutions provided by the examples of the present disclosure. Wherein, the preset event includes the above-mentioned first event and the above-mentioned second event.

In the example of the present disclosure, the above-mentioned image area recognition model has functions of recognizing in the target image picture the first image area, the first event associated with the first image area, the second image area, and the second event associated with the second image area. The image area recognition model can determine the first image area and the second image area in the target image picture, as well as the first event associated with the first image area and the second event associated with the second image area, according to the input target image picture.

It should be understood that according to the results output by the image area recognition model, in addition to acquiring the first image area and the second image area, the first event associated with the first image area and the second event associated with the second image area can also be known, so that the electronic device subsequently determines a first algorithm corresponding to the first image area based on the first event associated with the first image area, and similarly, the electronic device determines a second algorithm corresponding to the second image area based on the second event associated with the second image area.

It should be noted that the above-mentioned image area recognition model is trained based on multiple sample image pictures and labels of the multiple sample image pictures; wherein, a label of a sample image picture is configured to represent: the preset event that occurs in the sample image picture, and the image area in which the preset event occurs; wherein, the sample image picture and the target image picture are image pictures for the same type of space area. Wherein, the same type of space area refers to one or more space areas that may contain the same event. For example, since there may be a vehicle rear-end collision in a lane, lanes in different locations can be determined as the same type of space area.

Optionally, the first image area and the first event in the target image picture can be confirmed manually (refer to the relevant descriptions of S710-S740), and the second image area and the second event in the target image picture can be confirmed using the image area recognition model (refer to the relevant description of S810); similarly, the first image area and the first event in the above-mentioned target image picture can be confirmed using the image area recognition model (refer to the relevant description of S810); the second image area and the second event in the above target image picture can be confirmed manually (refer to the relevant descriptions of S740-S780).

S520. associating, by the electronic device, the first image area with a first algorithm, wherein the associating is configured to indicate that image recognition is performed on the first image area using the first algorithm to determine whether a first event exists in the first image area; associating, by the electronic device, the second image area with a second algorithm, wherein the associating is configured to indicate that image recognition is performed on the second image area using the second algorithm to determine whether a second event exists in the second image area.

It should be noted that the above-mentioned first algorithm can be an algorithm composed of one or more sub-algorithms; similarly, the above-mentioned second algorithm can be an algorithm composed of one or more sub-algorithms.

Optionally, the above method of associating the first image area with the first algorithm and associating the second image area with the second algorithm is specifically: establishing a mapping relationship between an identifier of the first image area and an identifier of the first algorithm or labeling the first algorithm on the first image area, so that the electronic device recognizes the first event in the first image area based on the first algorithm; similarly, establishing a mapping relationship between an identifier of the second image area and an identifier of the second algorithm, or labeling the second algorithm on the second image area, so that the electronic device recognizes the second event in the second image area based on the second algorithm.

Optionally, as shown in Figure 9, in conjunction with Figure 5, Figure 7, or Figure 8, the above-mentioned method of associating the first image area with the first algorithm, and associating the second image area with the second algorithm includes: S910.

S910. determining, by the electronic device, a first algorithm corresponding to a first event and a second algorithm corresponding to a second event based on correspondences between identifiers of events and identifiers of algorithms.

The above-mentioned specific method of determining the first algorithm corresponding to the first event and the second algorithm corresponding to the second event based on correspondences between identifiers of events and identifiers of algorithms includes: retrieving, by the electronic device, the first algorithm associated with the first event in the local or remote knowledge base based on the identifier of the first event corresponding to the first image area; similarly, retrieving, by the electronic device, the second algorithm associated with the second event in the local or remote knowledge base based on the identifier of the second event corresponding to the second image area.

It should be understood that the above method of determining the first algorithm corresponding to the first event and the second algorithm corresponding to the second event is: acquiring the identifier of the first event associated with the first image area based on the first image area, acquiring the identifier of the second event associated with the second image area based on the second image area.

Optionally, the identifier of the first event may be obtained by the electronic device querying the knowledge base based on the first event, or may be obtained as the identifier corresponding to the first event when the user manually configures the first event for the first image area, when determining the first image area in S510; the example of the present disclosure does not specifically limit the method of acquiring the identifier of the first event. It should be noted that the above-mentioned local or remote knowledge base is a database to store the correspondences between events and related algorithms.

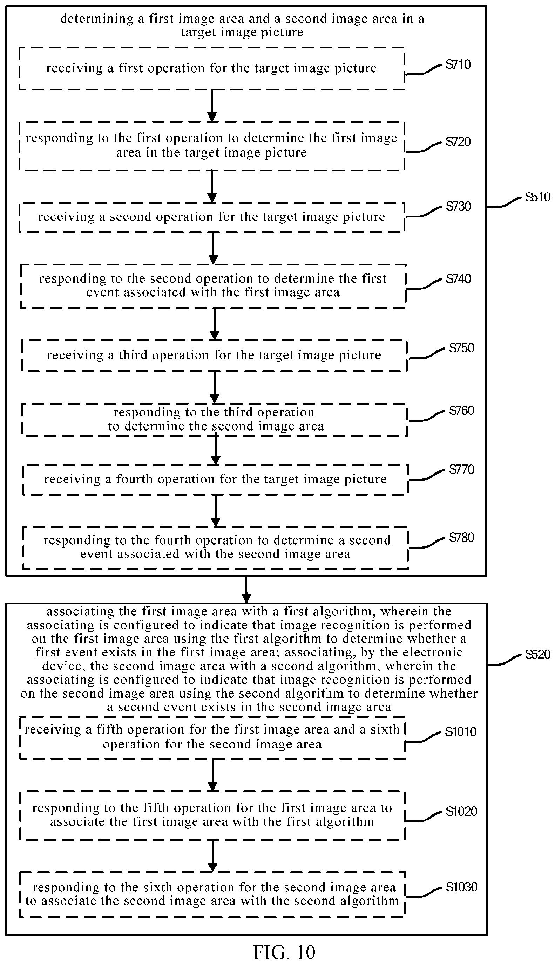

Optionally, as shown in Figure 10 in conjunction with Figure 5, Figure 7 or Figure 8, the above method of associating the first image area with the first algorithm, and associating the second image area with the second algorithm may further include: S1010-S1030.

S1010. receiving, by the electronic device, a fifth operation for the first image area and a sixth operation for the second image area.

The above-mentioned fifth operation may be configured for the user to manually select the associated first algorithm for the first image area; the above-mentioned sixth operation may be configured for the user to manually select the associated second algorithm for the second image area.

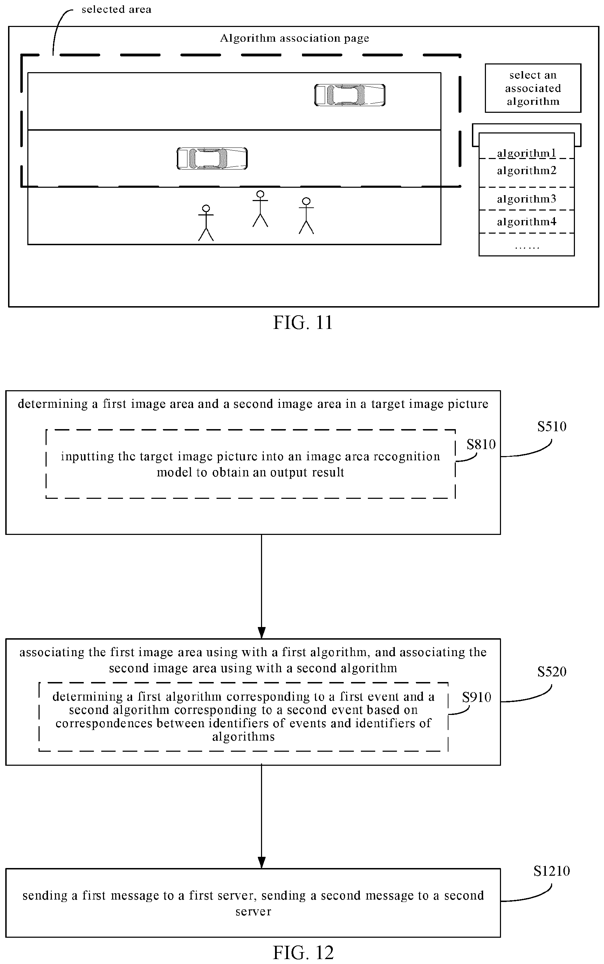

Optionally, after the user selects the first algorithm and the second algorithm, the electronic device acquires an identifier of the first algorithm and an identifier of the second algorithm based on the user's selection action. For example, as shown in Figure 11, the user selects the first image area in the above target image picture (i.e.: the area selected by the black dotted line in Figure 11); then, selects the algorithm to be associated. When the user selects the an algorithm 1 in Figure 11, it means that the algorithm 1 is determined as the first algorithm associated with the first image area.

S 1020. responding, by the electronic device, to the fifth operation for the first image area to associate the first image area with the first algorithm.

For example, based on the above example, after the user selects the algorithm 1 for the first image area on the web page as shown in Figure 11, the web page sends identifier information of the algorithm 1 and the identifier of the first image area (which may be position information of the first image area in the target image picture) to the electronic device, and then the electronic device determines the algorithm 1 associated with the first image area based on the identifier of the algorithm 1, and recognize whether a first event exists in the first image area using the algorithm 1.

S1030. responding, by the electronic device, to the sixth operation for the second image area to determine to associate the second image area with the second algorithm.

The above steps are similar to S1020, for details, refer to the relevant description of S 1020, which will not be repeated here.

As shown in conjunction with Figure 10, in an example, after the user manually block-selects an image area in the target image picture, the electronic device determines the target image area in the image area block-selected by the user; and then, after the user manually selects the target algorithm for the target image area, the electronic device establishes an association relationship between the target algorithm and the target image area, so that the electronic device recognizes whether a target event exists in the target image area based on the target algorithm.

As shown in conjunction with Figure 9, in another example, the electronic device recognizes the target image area and the target event associated with the target image area through the image area recognition model, then, the electronic device determines the target algorithm based on the target event, and establishes an association relationship between the target algorithm and the target image area , so that the electronic device recognizes whether a target event exists in the target image area based on the target algorithm.

As shown in conjunction with Figures 9 and 10, in yet another example, after the user manually determines the target image area and the target event associated with the target image area in the target image picture, the electronic device determines the target algorithm based on the target event and establishes an association relationship between the target image area and the target algorithm, so that the electronic device recognizes whether a target event exists in the target image area based on the target algorithm.

As shown in conjunction with Figures 9 and 10, in yet another example, after the electronic device recognizes the target image area and the target event associated with the target image area through the image area recognition model, the user selects the target algorithm based on the target event, the electronic device further establishes an association relationship between the target image area and the target algorithm, so that the electronic device recognizes whether a target event exists in the target image area based on the target algorithm.

An image recognition method provided by an example of the present disclosure, the electronic device determines a candidate area in which a first event occurs in a target image picture as a first image area, and determines a candidate area in which a second event occurs in a target image picture as a second image area; and determines an associated algorithm (i.e., first algorithm) for the first image area, and determines an associated algorithm (i.e., second algorithm) for the second image area; wherein, the first algorithm is configured to determine whether the first event exists in the first image area, the second algorithm is configured to determine whether the second event exists in the second image area. In this way, the electronic device can process the first event in the first image area based on the first algorithm, and can also process the second event in the second image area based on the second algorithm, thereby improving recognition of the electronic device to the target image picture.

Further, an image recognition method provided by an example of the present disclosure, the first image area and the second image area determined in the target image picture are associated with the first algorithm and the second algorithm respectively through the electronic device, so that the electronic device can not only determine whether the first event exists in the first image area based on the first algorithm, but also determine whether the second event exists in the second image area based on the second algorithm, thereby enabling the electronic device to process multiple events in the target area, solving the problem in the existing technology of physical space limitation when processing multiple events in the same area through multiple cameras, thus greatly saving resource costs.

Optionally, as shown in Figure 12 in conjunction with Figure 9, when the electronic device is a camera and the electronic device is applied in the image recognition system as shown in Figure 2, the image recognition method further includes: S1210.

S 1210. sending, by the electronic device, a first message to a first server and a second message to a second server.

The above-mentioned first message includes position information of the above-mentioned first image area in the above-mentioned first image picture and the identifier of the first algorithm, the first server determines whether a first event exists in the first image area indicated by the position information contained in the first message, based on the first algorithm indicated by the identifier of the first algorithm contained in the first message; the above-mentioned second message includes position information of the second image area in the second image picture and the identifier of the second algorithm, so that the second server determines whether a second event exists in the second image area indicated by the position information contained in the second message, based on the second algorithm indicated by the identifier of the second algorithm contained in the second message.

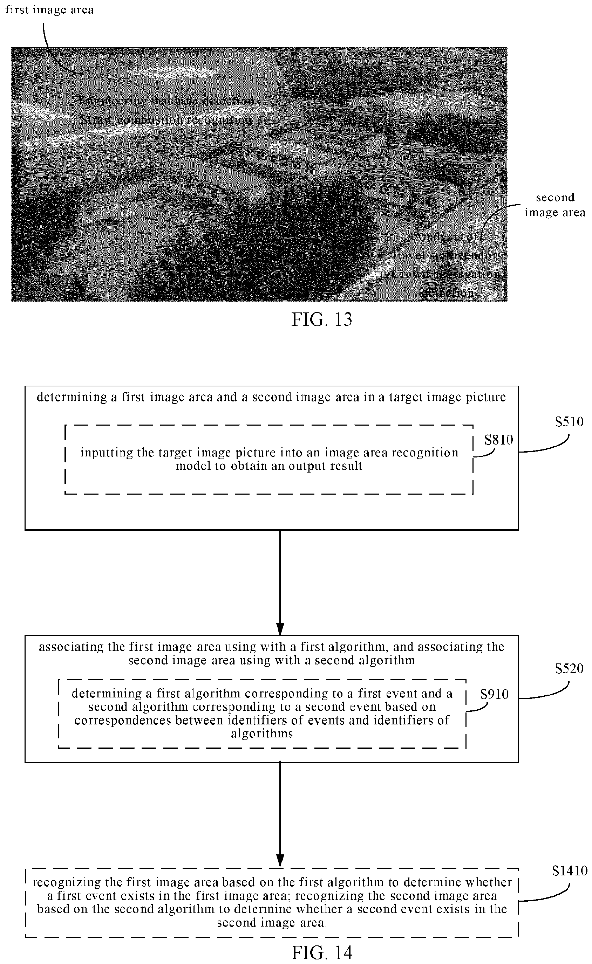

For example, the electronic device determines the first image area and the second image area in the image picture, (as shown in Figure 13, the first image area is an event recognition area for straw combustion, and the second image area is an event recognition area for vendors littering); and determines a first algorithm associated with the first image area and a second algorithm associated with the second image area. As shown in Figure 2, the electronic device sends a first message to the first server (Environmental Protection Bureau server), then, the Environmental Protection Agency server can determine whether a straw combustion event exists in the first image area based on the first message; simultaneously, the electronic device sends a second message to the second server (Urban Management Bureau server), and the Urban Management Bureau server determines whether a vendors littering event exists in the second image area based on the second message.

Optionally, as shown in Figure 14 in conjunction with Figure 9, when the above electronic device is a server or when the electronic device as shown in Figure 3 is a camera, the above image recognition method further includes: 1410.

S 1410. recognizing, by the electronic device, the first image area based on the first algorithm to determine whether a first event exists in the first image area; recognizing, by the electronic device, the second image area based on the second algorithm to determine whether a second event exists in the second image area.

It should be noted that when the target image area in S410 is an image area, the target image area may be the first image area or the second image area in S510-S520.

Optionally, when the target image area is the first image area, the target event is the first event, and the target algorithm is the first algorithm.

Optionally, when the target image area is the second image area, the target event is the second event, and the target algorithm is the second algorithm.

Accordingly, an example of the present disclosure provides an electronic device which is configured to perform each step in the above image recognition method. The example of the present disclosure can divide the electronic device into functional modules according to the above method examples. For example, each of function modules is divided corresponding to each of functions, or two or more functions can also be integrated into one processing module. The above integrated module can be implemented in the form of hardware or software function module. The dividing of modules in the examples of the present disclosure is schematic and is only a logical function dividing, and there may be other dividing methods in actual example.

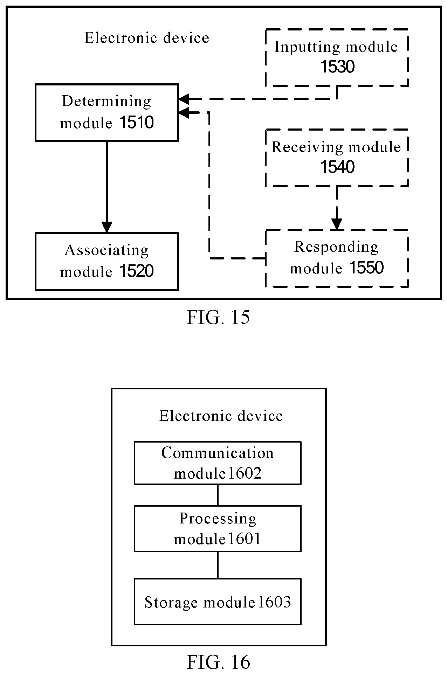

In case that each of function modules is divided corresponding to each of functions, a schematic diagram of a possible structure of the electronic device involved in the above example is shown in Figure 15. As shown in Figure 15, the electronic device includes: a determining module 1510 and an associating module 1520.

The determining module 1510 is configured for determining a target image area in a target image picture, for example, carry out step S410 in the above method example.

The associating module 1520 is configured for associating the target image area with a target algorithm, for example, carry out step S420 in the above method example.

Optionally, the electronic device provided by the example of the present disclosure includes an inputting module 1530; the inputting module 1530 is configured for inputting the target image picture into an image area recognition model to obtain an output result, for example, carry out step S810 in the above method example.

The output result includes: the target image area and the target event; wherein the image area recognition model is configured to recognize a candidate area in which a preset event occurs in the target image picture and recognize the target event occurring in the target image picture, wherein the preset event includes the target event;
The image area recognition model is trained based on multiple sample image pictures and labels of the multiple sample image pictures; wherein a label of a sample image picture is configured to represent: the preset event that occurs in the sample image picture, and the image area in which the preset event occurs.

After obtaining the output result containing the target image area, the inputting module 1530 inputs the output result to the determining module 1510, and the determining module 1510 can read the target image area from the output result, thereby determining the target image area in the target image picture.

Optionally, the electronic device provided by the example of the present disclosure further includes a receiving module 1540 and a responding module 1550; the receiving module 1540 is configured for receiving a first operation for the target image picture, for example, carry out step S710 in the above method example.

The responding module 1550 is configured for responding to the first operation to determine the target image area in the target image picture, for example, carry out step S720 in the above method example.

Specifically, after the responding module 1550 determines the first image area, the determined first image area can be input to the determining module 1510, and the determining module 1510 can determine the first image area as the target image area.

Each module of the above-mentioned electronic device can also be configured to carry out other actions in the above-mentioned method example. All relevant content of each step involved in the above-mentioned method example can be quoted from the functional description of the corresponding function module, and will not be repeated here.

In the case of using an integrated unit, a schematic diagram of the structure of the electronic device provided by the example of the present disclosure is shown in Figure 16. In Figure 16, the electronic device includes: a processing module 1601 and a communication module 1602. The processing module 1601 is configured for controlling and managing the actions of the electronic device, for example, to carry out the steps performed by the above-mentioned determining module 1510, associating module 1520, inputting module 1530, receiving module 1540 and responding module 1550, and/or to carry out the other processes of technology described herein. The communication module 1602 is configured for supporting interactions between the electronic device and other devices. As shown in Figure 16, the electronic device may further include a storage module 1603, which is configured for storing program codes and target image pictures of the electronic device, etc.

Wherein, the processing module 1601 may be a processor or a controller, such as the processor 301 in Figure 3. The communicating module 1602 may be a transceiver, an RF circuit or a communication interface, such as the bus 304 and/or the network interface 303 in Figure 3. The storage module 1603 may be a memory, such as the internal memory 302 in Figure 3.

In the above examples, it may be implemented in whole or in part by software, hardware, firmware or any combination thereof. When implemented in software, it can be implemented in whole or in part in the form of a computer program product. The computer program product includes one or more computer instructions. When the computer program instructions are loaded and executed on a computer, the processes or functions described in the examples of the present disclosure are generated in whole or in part. The computer may be a general purpose computer, special purpose computer, computer network, or other programmable device. The computer instructions may be stored in a computer readable storage medium or transmitted from one computer readable storage medium to another computer readable storage medium, for example, the computer instructions may be transmitted from a website, computer, server or data center to another website, computer, server, or data center by wire (such as coaxial cable, fiber optic, digital subscriber line (DSL)) or wirelessly (such as infrared, wireless, microwave, etc.). The computer-readable storage medium may be any usable medium that can be accessed by a computer or a data storage device such as a server and a data center and the like that includes an integration of one or more available media. The usable media may be magnetic media (such as a floppy disk, a hard disk, a magnetic tape), optical media (such as digital video disc (DVD)), or semiconductor media (such as Solid State Disk (SSD)) and the like.

In yet another example provided by the present disclosure, a computer-readable storage medium is also provided, which stores computer program that, when executed by a processor, causes the processor to carry out any step of the image recognition methods.

In yet another example provided by the present disclosure, a computer program product including instructions is also provided, which, when running on a computer, causes the computer to carry out any of the image recognition methods.

Through the above description of the examples, those skilled in the art can clearly understand that for the convenience and simplicity of description, only the division of the above functional modules is used as an example. In actual applications, the above functions can be assigned to different functional modules as needed, that is, the internal structure of the device can be divided into different functional modules to complete all or part of the functions described above. For the specific working processes of the systems, devices and units described above, reference can be made to the corresponding processes in the foregoing method examples, which will not be repeated here.

In the several examples provided in this application, it should be understood that the disclosed systems, apparatuses and methods can be implemented in other ways. For example, the device examples described above are only illustrative. For example, the division of modules or units is only a logical function division. In actual example, there may be other division methods, for example, multiple units or components may be combined or integrated into another system, or some features can be ignored, or not implemented. On the other hand, the coupling or direct coupling or communication connection between each other shown or discussed may be through some interfaces, and the indirect coupling or communication connection of the devices or units may be in electrical, mechanical or other forms.

The units described as separate components may or may not be physically separated, and the components shown as units may or may not be physical units, that is, they may be located in one place, or they may be distributed to multiple network units. Some or all of the units can be selected according to actual needs to achieve the purpose of the solution of this example.

In addition, each functional unit in each example of the present disclosure can be integrated into one processing unit, each unit can exist physically alone, or two or more units can be integrated into one unit. The above integrated units can be implemented in the form of hardware or software functional units.

If the integrated unit is implemented in the form of a software functional unit and sold or used as an independent product, it may be stored in a computer-readable storage medium. Based on this understanding, the technical solution of the present disclosure is essentially or contributes to the existing technology, or all or part of the technical solution can be embodied in the form of a software product, and the computer software product is stored in a storage medium, including several instructions to cause a computer device (which may be a personal computer, a server, or a network device, etc.) or a processor to carry out all or part of the steps of the methods described in various examples of the present disclosure. The aforementioned storage media includes: a flash memory, a mobile hard disk, a read-only memory, a random access memory, a magnetic disk or an optical disk and various medias that can store program codes.

The above are only specific examples of the present disclosure, but the protection scope of the present disclosure is not limited thereto, any changes or substitutions within the technical scope disclosed in the present disclosure shall be covered by the protection scope of the present disclosure. Therefore, the protection scope of the present disclosure should be subject to the protection scope of the claims.

## Claims

1. An image recognition method, comprising:
determining a target image area in a target image picture; wherein the target image area is a candidate area in which a target event occurs in the target image picture;
associating the target image area with a target algorithm; wherein the associating indicates that image recognition is performed on the target image area using the target algorithm to determine whether the target event exists in the target image area.

2. The method according to claim 1, wherein determining the target image area in the target image picture comprises:
inputting the target image picture into an image area recognition model to obtain an output result which comprises: the target image area and the target event; wherein the image area recognition model is configured to recognize a candidate area in which a preset event occurs in the target image picture, and the preset event comprises the target event.

3. The method according to claim 2, wherein the image area recognition model is trained based on multiple sample image pictures and labels of the multiple sample image pictures; wherein a label of a sample image picture is configured to represent: the preset event that occurs in the sample image picture, and an image area in which the preset event occurs.

4. The method according to claim 1, wherein determining the target image area in the target image picture comprises:
receiving a first operation for the target image picture; wherein the first operation is configured to indicate the target image area in the target image picture;
responding to the first operation to determine the target image area in the target image picture;
receiving a second operation for the target image area; wherein the second operation is configured to indicate the target event associated with the target image area;
responding to the second operation to determine the target event associated with the target image area.

5. The method according to any one of claims 1 to 4, wherein associating the target image area with the target algorithm comprises:
establishing a correspondence between an identifier of the target image area and an identifier of the target algorithm.

6. The method according to claim 5, wherein before establishing the correspondence between the identifier of the target image area and the identifier of the target algorithm, the method further comprises:
determining the target algorithm corresponding to the target event based on correspondences between the identifiers of events and identifiers of algorithms.

7. An electronic device, comprising: a determining module and an associating module;
wherein the determining module is configured for determining a target image area in a target image picture; wherein the target image area is a candidate area in which a target event occurs in the target image picture;
wherein the associating module is configured for associating the target image area with a target algorithm; wherein the associating indicates that image recognition is performed on the target image area using the target algorithm to determine whether the target event exists in the target image area.

8. The electronic device according to claim 7, wherein the electronic device further comprises: an inputting module;
the inputting module is configured for inputting the target image picture into an image area recognition model to obtain an output result which comprises: the target image area and the target event; wherein the image area recognition model is configured to recognize a candidate area in which a preset event occurs in the target image picture, and the preset event comprises the target event;
the image area recognition model is trained based on multiple sample image pictures and labels of the multiple sample image pictures; wherein a label of a sample image picture is configured to represent: the preset event that occurs in the sample image picture, and an image area in which the preset event occurs.

9. The electronic device according to claim 7, wherein the electronic device further comprises: a receiving module and a responding module;
the receiving module is configured for receiving a first operation for the target image picture; wherein the first operation is configured to indicate the target image area in the target image picture;
the responding module is configured for responding to the first operation to determine the target image area in the target image;
the receiving module is further configured for receiving a second operation for the target image area; wherein the second operation is configured to indicate the target event associated with the target image area;
the responding module is further configured for responding to the second operation to determine the target event associated with the target image area.

10. The electronic device according to any one of claims 7 to 9, wherein,
the associating module is configured for establishing a correspondence between an identifier of the target image area and an identifier of the target algorithm;
the determining module is further configured for determining the target algorithm corresponding to the target event based on correspondences between identifiers of events and identifiers of algorithms.

11. An electronic device, comprising a memory and a processor, the memory being coupled to the processor; wherein the memory is configured to store computer program codes comprising computer instructions that, when executed by the processor, cause the electronic device carry out the method according to any one of claims 1 to 6.

12. A computer storage medium, comprising computer instructions, which, when run on a computing device, causes the computing device to carry out the method according to any one of claims 1 to 6.

13. A computer program product comprising instructions, which, when run on a computer, causes the computer to carry out the method according to any one of claims 1 to 6.
